# EUROPÄISCHE PATENTANMELDUNG

(11) **EP 0 716 006 A2**
(43) Veröffentlichungstag der Anmeldung: **12.06.1996**
(21) Anmeldenummer: 95250299.5
(22) Anmeldetag: 06.12.1995
(51) Int. Cl.: B62D 55/265

(54) **Verfahren und Raupenfahrzeug zum Befahren magnetischer Oberflächen**

(30) Priorität: 07.12.1994 DE 4445055
(71) Anmelder: GESTA Gesellschaft für Stahlrohrgerüste mbH, D-13407 Berlin (DE)
(72) Erfinder: Thiem, Gerhard, D-42781 Haan (DE)
(74) Vertreter: Müller, Wolfram Hubertus, Dipl.-Phys.

(57) **Zusammenfassung**

Bei diesem Verfahren zum Befahren magnetischer Oberflächen mit einem Raupenfahrzeug wird die Haltekraft mittels Haftmagneten (31) erzeugt, welche als Permanent-Elektromagnete ausgebildet sind. Bei der Verwendung von Permanent-Elektromagneten kann mittels eines Erregerstromes eine Magnetkraft neutralisiert oder erzeugt werden. Wenn die Magnetkraft der Haftmagnete (31) neutralisiert wird, ist das Raupenfahrzeug leicht von der Oberfläche abnehmbar. Aufgrund der ohne Energiezufuhr wirksamen Magnetkraft der Permanent-Elektromagnete kann auf Sicherungsmaßnahmen gegen Stromausfall verzichtet werden. Raupenfahrzeuge mit Haftmagneten werden unter anderem zur Reinigung von Schiffswänden eingesetzt.

## Beschreibung

Die Erfindung betrifft ein Verfahren zum Befahren magnetischer Oberflächen mit einem Raupenfahrzeug nach dem Oberbegriff des Anspruchs 1 und ein Raupenfahrzeug zum Befahren magnetischer Oberflächen nach dem Oberbegriff des Anspruchs 5.

Solche Raupenfahrzeuge können zum Reinigen, Sandstrahlen, Anstreichen oder zur Prüfung von Schweißnähten selbst auf senkrechten oder überhängenden magnetischen Oberflächen eingesetzt werden. Dafür werden sie mit geeignetem Zubehör, wie Bürsten, Spritz-, Strahlvorrichtungen oder Überwachungseinrichtungen versehen.

In der DE-PS 2 023 683 wird ein Fahrzeug mit magnetischer Bodenhaftung offenbart, welches zwei seitlich angeordnete Magnetgeräte aufweist, um welche endlose Antriebsriemen herumgeführt sind, und in dessen Mittelpunkt ein zusätzliches Magnetgerät angeordnet ist. Das im Mittelpunkt des Fahrzeuges angeordnete Magnetgerät stellt seine Vertikalbewegung zur Oberfläche automatisch ein und bewirkt so eine konstante Haftkraft zwischen dem Fahrzeug und der zu befahrenden Oberfläche. Allerdings können Bodenunebenheiten, wie z. B. Schweißnähte, Niete oder sich überdeckende Platten aufgrund der starren Lagerung der Antriebsriemen schlecht ausgeglichen werden. Bei derartigen Unebenheiten besteht die Gefahr, daß das Fahrzeug infolge zu schwacher Haftkräfte von der Oberfläche abkippt. Für Richtungsänderungen kann das Fahrzeug über einen Zusatzantrieb um das um den Mittelpunkt angeordnete Magnetgerät gedreht werden.

In der Offenlegungsschrift DE-OS 2 413 688 wird ein Raupenfahrzeug zum Befahren senkrechter Wände und Decken beschrieben. Dieses Fahrzeug ist je nach dem zu befahrendem Untergrund mit Magneten oder Unterdruckeinrichtungen an den Raupen ausgestattet.

Die oben beschriebenen bekannten Raupenfahrzeuge sind alternativ mit Elektro- oder Permanentmagneten zum Haften an der magnetischen Oberfläche versehen. In beiden Fällen muß ein großer Energieaufwand betrieben werden, um eine ausreichend große Haftkraft zu erzielen.

Die Ausführung der Haftvorrichtungen als Permanentmagnete erfodert einen erheblichen Kraftaufwand beim Fahrbetrieb, da im Fahrbetrieb das Abkippen der einzelnen Kettenglieder von der magnetischen Oberfläche durch die Magnetkraft erschwert wird. Weiter müssen beim Ablösen des Fahrzeuges von der magnetischen Oberfläche aufwendige Hilfsmittel, wie Kräne oder Seilzüge, eingesetzt werden.

Werden Elektromagnete als Haftmittel verwendet, muß fortwährend elektrische Energie zugeführt werden, um ein sicheres Haften zu gewährleisten. Dies ist sowohl energetisch ungünstig als auch sicherheitstechnisch nachteilig, da das Fahrzeug gegen plötzlichen Stromausfall gesichert sein muß.

Der Erfindung liegt die Aufgabe zugrunde, ein Verfahren und ein Raupenfahrzeug zum Befahren magnetischer Oberflächen zu schaffen, welches die genannten Nachteile vermeidet. Insbesondere soll beim Befahren magnetischer Oberflächen möglichst wenig Energie verbraucht werden, Sicherungsmaßnahmen gegen Stromausfall sollen weitgehend unnötig gemacht und das Abnehmen des Raupenfahrzeuges von der Oberfläche soll erleichtert werden.

Erfindungsgemäß werden zur Lösung dieser Aufgabe ein Verfahren und ein Raupenfahrzeug zum Befahren magnetischer Oberflächen geschaffen, wobei die Haltekraft mittels Haftmagneten erzeugt wird, die als Permanent-Elektromagnete (permanentmagnetisch erregte, elektrisch schaltbare Magnete) ausgebildet sind.

Permanent-Elektromagnete sind eine Mischform aus Permanent- und Elektromagneten, bei denen einerseits eine Magnetkraft im magnetisierten Zustand auch ohne Stromzufuhr erhalten bleibt und andererseits die Magnetkraft durch Anlegen eines Erregerstroms neutralisierbar ist. Dabei ist um einen Magnetkern eine Spule gewickelt, über die ein Erregerstrom eine Magnetkraft induzieren kann. Der Magnetkern kann einerseits permanentmagnetisch ausgebildet sein. In diesem Fall wird der Permanent-Elektromagnet neutralisiert, wenn die durch den Erregerstrom induzierte Magnetkraft der Magnetkraft des permanentmagnetischen Kerns entgegenwirkt und diese kompensiert. Oder der Magnetkern ist polarisierbar ausgebildet, so daß er mittels des Erregerstroms polarisiert, d.h. magnetisiert werden kann. Mittels eines entgegengesetzten Erregerstroms kann das polarisierte Dauermagnetmaterial wieder neutralisiert, d.h. entmagnetisiert werden.

Die Eigenschaften der Permanent-Elektromagnete lassen sich vorteilhaft für das erfindungsgemäße Verfahren nutzen. Von den Permanent-Elektromagneten wird eine Haftkraft erzeugt, die das Raupenfahrzeug ohne Energiezufuhr auf der magnetischen Oberfläche halten kann, was Sicherungsmaßnahmen gegen Stromausfall unnötig macht. Eine Energieeinsparung gegenüber bisherigen Raupenfahrzeugen ergibt sich dadurch, daß nur der Erregerstrom eine Verlustleistung erzeugt. Weiter können die Permanent-Elektromagnete jederzeit neutralisiert werden, was z.B. beim Abnehmen des Raupenfahrzeuges von der magnetischen Oberfläche das Überwinden der Magnetkräfte vermeidet.

Vorzugsweise wird zur Durchführung des erfindungsgemäßen Verfahrens ein Raupenfahrzeug mit zwei Raupen, die je eine Raupenkette aufweisen, verwendet, bei dem die Haftmagnete an oder in den Raupenketten angeordnet sind, wobei sich im Fahrbetrieb die Haftmagnete am vorderen Ende des Raupenfahrzeugs beim Aufsetzen auf die Oberfläche in einem neutralisierten Zustand befinden und nach dem Aufsetzen auf die Oberfläche magnetisiert und die Haftmagnete am hinteren Ende des Raupenfahrzeuges vor dem Abnehmen von der Oberfläche neutralisiert werden. Dadurch wird ein stoßarmes Aufsetzen und ein kraftfreies Abkippen der Kettenglieder ermöglicht. Nach dem Aufsetzen der Haftmagnete auf die Oberfläche wird deren neutralisierter Zustand aufgehoben, d.h. die volle Magnetkraft steht dem Raupenfahrzeug wieder zur Verfügung. Das Neutralisieren und das Magnetisieren der Haftmagnete erfolgt nur kurzzeitig, weshalb im Fahrbetrieb nur wenig elektrische Leistung zugeführt werden muß.

Vorzugsweise sind die Raupen des Raupenfahrzeuges an einem Lasttragerahmen befestigt, der drehbar um Hilfsmagnete gelagert ist. Zur Änderung der Fahrtrichtung werden ein oder mehrere Hilfsmagnete aktiviert, die Haftmagnete neutralisiert und der Lasttragerahmen mittels eines Hilfsantriebes gedreht. Dies ermöglicht eine präzise Steuerung des Fahrzeuges, da Einflüsse der Oberflächenbeschaffenheit auf den Drehvorgang verringert werden.

Ein Raupenfahrzeug, mit dem insbesondere das erfindungsgemäße Verfahren durchgeführt werden kann, ist durch die Merkmale des Anspruchs 5 charakterisiert.

Eine einfache Montierbarkeit der Haftmittel an dem Raupenfahrzeug läßt sich erreichen, wenn die Haftmagnete an den Kettengliedern der Raupenkette angeordnet sind.

Wenn am vorderen und hinteren Ende einer Raupe jeweils Mittel zum Neutralisieren der Haftmagnete vorgesehen sind, wird im Fahrbetrieb stoßfreies Aufsetzen und kraftfreies Abkippen der Kettenglieder ermöglicht.

Als ein kostengünstiges Mittel zum Neutralisieren der Haftmagnete können Schleifkontakte verwendet werden.

In einer vorteilhaften Ausführung wird der Lasttragerahmen des Raupenfahrzeuges drehbar um Hilfsmagnete, welche das Gewicht des Raupenfahrzeuges tragen können, gelagert. Mittels eines Hilfsantriebes, welcher den Lasttragerahmen drehen kann, können Richtungsänderungen präzise ausgeführt werden.

Der Antrieb der Raupenketten von je einem Motor, wobei die beiden Motoren unabhängig voneinander oder gleichsinnig steuerbar sind, ermöglicht auch das Abfahren gekrümmter Strecken.

Vorteilhaft ist es, die Antriebseinheit fernsteuerbar und/oder programmierbar zu gestalten, da dann Bearbeitungsflächen selbstständig abgearbeitet werden können.

Das Rücklaufen des Raupenfahrzeuges beim Anhalten kann durch Selbsthemmung des Antriebes vermieden werden.

Die Kettenglieder werden vorzugsweise zum Ausgleich von Unebenheiten durch eine Pendelaufhängung flexibel gelagert.

In einer Vorzugsausführung werden an beiden Enden des Raupenfahrzeugs Mittel zur Überwachung der Oberflächenbeschaffenheit vorgesehen. Dadurch können bei Erfassung nichtmagnetischen Untergrundes das Fahrzeug stillgesetzt und Unfälle vermieden werden. Gleichzeitig kann die Oberflächenüberwachung zu anspruchsvoller Oberflächenbearbeitung oder zur Oberflächenprüfung eingesetzt werden.

Wird auf dem Raupenfahrzeug ein Träger befestigt, auf dem Versorgungsleitungen geführt werden, kann mit einer Meßapparatur die Zugspannung an den Versorgungsleitungen gemessen werden. Bei einer zu großen Zugkraft kann das Fahrzeug zur Unfallverhütung stillgesetzt werden.

In einer bevorzugten Ausführung ist auf dem Raupenfahrzeug eine Strahlvorrichtung vorgesehen. Diese Strahlvorrichtung umfaßt eine Strahlglocke in die durch eine Strahlschlauchdurchführung der Strahlschlauch mit der Strahldüse durchgeführt sind, einen Absaugstutzen und Kunststoffborsten zum Abdichten der Strahlglocke. Damit läßt sich das Fahrzeug günstig zum Reinigen magnetischer Oberflächen einsetzen.

Wird die Strahldüse gemäß Anspruch 18 über die Bearbeitungsfläche geführt, läßt sich die Größe der Bearbeitungsfläche über den Exzenterantrieb verstellen.

Die Erfindung wird nachfolgend anhand der Zeichnungen genauer beschrieben.

Es zeigt:
- Fig. 1a:: eine Ausführungsform des erfindungsgemäßen Raupenfahrzeuges in der Draufsicht;
- Fig. 1b:: einen Schnitt durch einen Teil des Raupenfahrzeuges gemäß Fig. 1a;
- Fig. 1c:: die Seitenansicht einer Raupe des Raupenfahrzeuges;
- Fig. 1d:: eine Ausführungsform der Kettenlagerung in der Seitenansicht;
- Fig. 1e:: Seitenansicht einer Raupe des Raupenfahrzeuges mit Schleifkontakten
- Fig. 2a:: eine zweite Ausführungsform des erfindungsgemäßen Raupenfahrzeuges in der Draufsicht;
- Fig. 2b:: eine geschnittene Seitenansicht des Lasttragerahmens und der Strahlglocke des Raupenfahrzeuges gemäß Fig. 2a;
- Fig. 2c:: eine vergrößerte Darstellung der Führungsrollenlagerung gemäß Fig. 2b;
- Fig. 2d:: eine zweite Ausführungsform der Kettenlagerung in der Seitenansicht;
- Fig. 3:: die Strahlvorrichtung gemäß Fig. 2b in der geschnittenen Seitenansicht;
- Fig. 4:: einen Exzenterantrieb der Strahlvorrichtung in der Unteransicht.

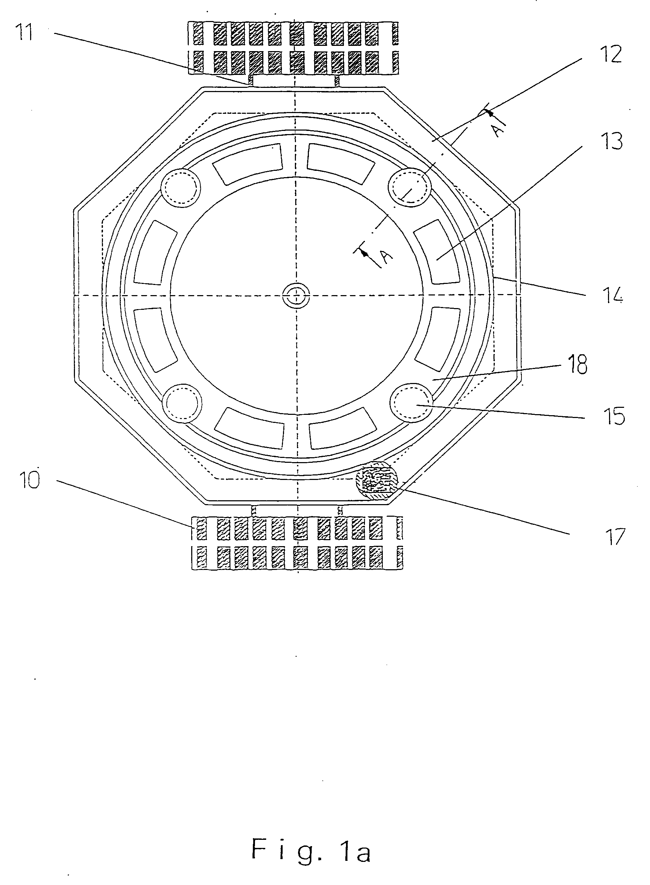

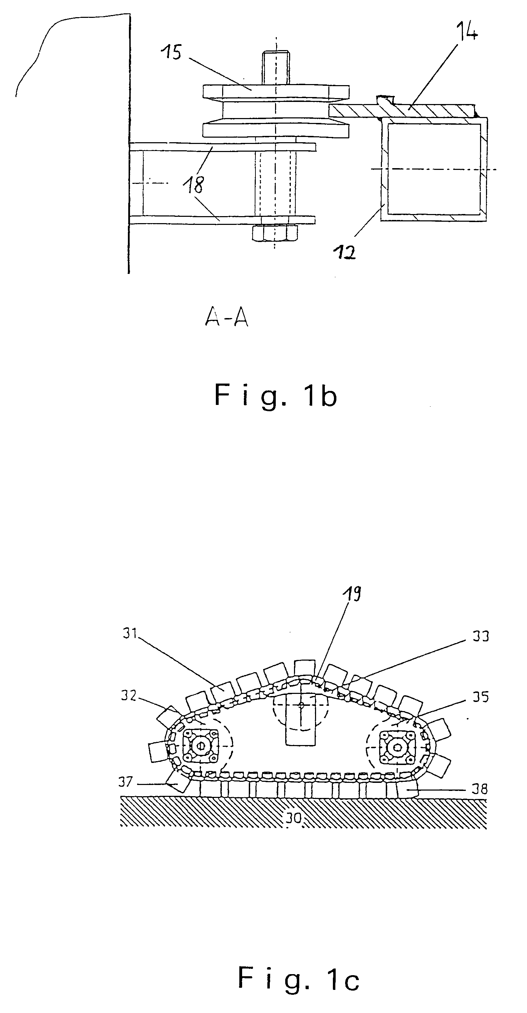

Das in der Figur 1a dargestellte erfindungsgemäße Raupenfahrzeug besitzt zwei unabhängig voneinander angetriebene Raupen 10 mit je einer Raupenkette 19 (s. Fig. 1c). Die Raupen 10 sind mit einer Schnellverbindung 11 am Lasttragerahmen 12 befestigt. Auf dem Lasttragerahmen 12 ist ein Drehkranz 14 aufgeschweißt, in dem die Führungsrollen 15 geführt werden. Die Führungsrollen 15 sind auf einem Haltekranz 18 gelagert, auf dem auch die Hilfsmagnete 13 befestigt sind. Auf dem Lasttragerahmen 12 ist der Hilfsantrieb 17 mit einer nicht näher dargestellten Drehvorrichtung angeordnet.

Die Figur 1b zeigt einen vergrößerten Schnitt durch einen Teil des Raupenfahrzeuges gemäß der Figur 1a. Die Führungsrolle 15 wird auf dem Drehkranz 14 geführt. Dadurch ist der Drehkranz 14 zusammen mit dem Lastragerahmen 12 drehbar um den Haltekranz 18 gelagert.

In der Figur 1c wird eine Raupe 10 des Raupenfahrzeuges auf einer magnetischen Oberfläche 30 in der Seitenansicht dargestellt. Auf einer Befestigungsplatte 34 sind drei Zahnräder 32, 33, 35 zur Führung der Raupenkette 19 angeordnet. Die Raupenkette 19 aus Edelstahl besitzt an ihren Kettengliedern doppelreihig angeordnete Haftmagnete 31, welche Permanent-Elektromagnete sind.

Bei der in Fig. 1c dargestellten Raupe sind die Permanent-Elektromagnete beispielsweise als neutralisierbare Permanentmagnete ausgeführt. Dabei wird der permanentmagnetische Kern von einer Spule umgeben, über die mittels eines Erregerstroms eine Magnetkraft induziert werden kann, die der Magnetkraft des Permanentmagneten entgegenwirkt. Die induzierte Magnetkraft kann die Magnetkraft des Permanentmagneten neutralisieren.

Im Fahrbetrieb wird der vordere, als nächstes mit der Bearbeitungsfläche in Kontakt kommende Haftmagnet 37 mittels eines nicht dargestellten Schleifkontaktes durch einen Errgerstrom kurzzeitig neutralisiert (Neutralisationsbereich), um ein sanftes Aufsetzen des Haftmagnetes auf die Oberfläche zu erreichen. Der hintere Haftmagnet 38 wird vor dem Abkippen von der magnetischen Oberfläche 30 durch einen weiteren Schleifkontakt ebenfalls neutralisiert. Die Anzahl, der auf der magnetischen Oberfläche 30 befindlichen Haftmagnete wird durch das Gewicht des Raupenfahrzeuges und des aufzunehmenden Werkzeuges bestimmt, wobei eine sichere Haftkraft gewährleistet sein muß. Dabei sind kleine Raupenfahrzeuge zum Befahren von Rohren und große Raupenfahrzeuge zum Tragen von Gerüsten denkbar.

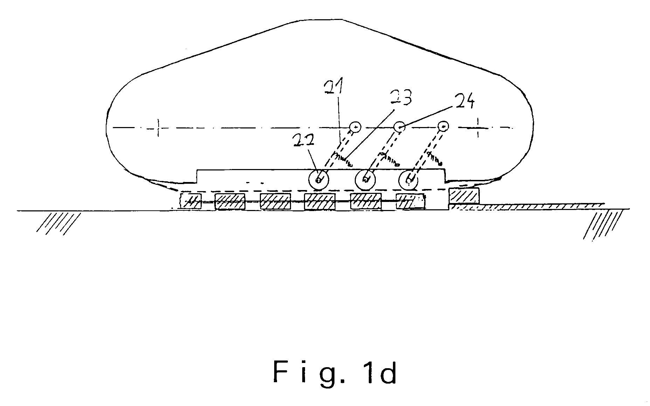

Die Kettenglieder werden auf der magnetischen Oberfläche 30 mittels einer in Figur 1d dargestellten Pendelaufhängung so geführt, daß auch Unebenheiten ausgeglichen werden können.

Diese Lagerung für Raupenketten ist allgemein für Raupenfahrzeuge verwendbar. Dabei werden die Kettenglieder während des Kontaktes mit der Oberfläche über Lagerrollen 22 geführt. Die Lagerrollen sind an Drehlagern 24 gelagerten Pendelstäben 21 angeordnet. Die Pendelstäbe sind durch Federn 23 mit einer Federkraft beaufschlagt. Bei einer Vertiefung in der Oberfläche werden die Kettenglieder an dieser Stelle über die Lagerrolle 22 in die Vertiefung gedrückt. Bei einer Auswölbung der Oberfläche drücken die Kettenglieder an dieser Stelle auf die Lagerrollen 22. Die Lagerrollen 22 gleichen die Unebenheit mit einer hebelartigen Bewegung nach oben aus. Für das erfindungsgemäße Raupenfahrzeug hat die Pendelaufhängung den Vorteil, daß auch bei Unebenheiten eine große Kontaktfläche der an der Raupenkette 19 geführten Haftmagnete 31 mit der magnetischen Oberfläche 30 gewährleistet wird.

Zum Aufbringen oder Abnehmen des Raupenfahrzeuges werden die Haftmagnete 31, welche sich an der magnetischen Oberfläche 30 befinden, mit einem Erregerstrom beaufschlagt (z. B. über zusätzliche Schleifkontakte), so daß sich die Haftmagnete 31 in einem neutralisierten Zustand befinden. Das Raupenfahrzeug ist dann ohne das Überwinden von Magnetkräften von der Oberfläche abnehmbar und auf die Oberfläche aufsetzbar.

Für eine Änderung der Fahrtrichtung wird das Raupenfahrzeug angehalten und die Hilfsmagnete 13 werden erregt, so daß sie ein sicheres Haften des Raupenfahrzeuges auf der magnetischen Oberfläche 30 gewährleisten. Nachdem das Steuerungssystem des Fahrzeuges die Haftkraft geprüft hat, erfolgt das Neutralisieren der Haftmagnete 31, welche sich in Kontakt mit der magnetischen Oberfläche befinden. Der Hilfsantrieb 17 dreht dann über ein an seiner Abtriebswelle befindliches Zahnritzel mit einer Kette den Lasttragerahmen 12 um den mit einem Zahnkranz versehenen Haltekranz 18 auf die gewünschte Position (nicht dargestellt). Damit besitzt das Raupenfahrzeug einen äußerst kleinen Drehradius.

Nach dem Drehvorgang wird der Erregerstrom, welcher die sich in Kontakt mit der magnetischen Oberfläche 30 befindlichen Haftmagnete 31 neutralisiert, abgestellt, die Hilfsmagnete 13 deaktiviert und der Fahrbetrieb kann fortgeführt werden.

Der Antrieb der Raupenketten erfolgt elektrisch über einen wartungsfreien bürstenlosen Servomotor und ist bodengesteuert und programmierbar. Die Drehzahl ist stufenlos einstellbar und wird über ein mechanisches Übertragungssystem auf die beiden Antriebszahnräder 32 und 35 übertragen. Über die frei wählbare Spindelsteigung und das Übersetzungsverhältnis kann die zu übertragende Kraft und Geschwindigkeit des Raupenfahrzeuges bestimmt werden. Der mögliche Geschwindigkeitsbereich beträgt üblicherweise bei einer Vorzugsausführung der Erfindung bis zu 10 m/min. Die Antriebe sind selbsthemmend, weshalb das Raupenfahrzeug rücklaufsicher gestoppt werden kann. Beide Raupenkettenantriebe sind identisch aufgebaut und können gekrümmte Strecken durch unterschiedliche Geschwindigkeitseinstellungen abfahren.

Das Raupenfahrzeug ist am vorderen und hinteren Ende jeweils mit Sensoren ausgerüstet, mit denen eine redundante Überprüfung von Abstand und Beschaffenheit des Untergrundes vorgenommen wird. Dabei werden als Sensoren sowohl induktive Näherungssensoren, als auch kapazitive und optische Sensoren verwendet. Bei nicht magnetischem Untergrund oder zu großem Luftspalt, der z. B. durch flächenmäßig aufgetragenen Kunststoffüberzug oder Verwendung von Aluminiumplatten auftritt, wird eine Störungsmeldung ausgelöst und das Fahrzeug unmittelbar stillgesetzt.

Als Ausführungsvariante ist ebenfalls eine Bildüberwachung vorgesehen, mit der Oberflächenprüfungen oder eine anspruchsvolle Oberflächenbearbeitung durchgeführt werden.

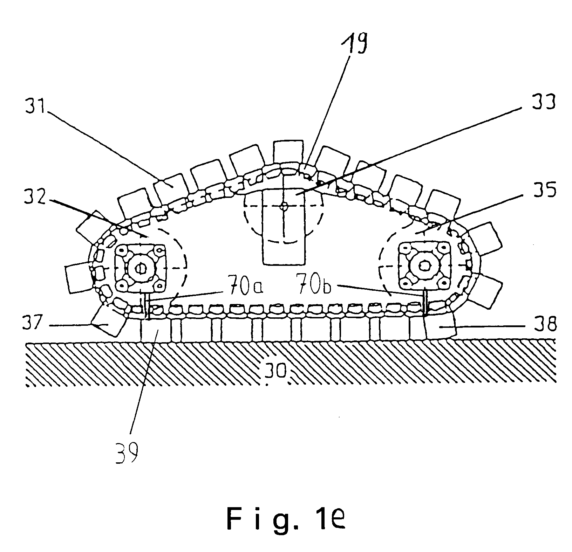

In Figur 1e ist die Anordnung von Schleifkontakten 70a, 70b zum Neutralisieren bzw. Magnetisieren der Haftmagnete 31 schematisch dargestellt. Die Schleifkontakte 70a, 70b sind am Gestell der Raupe 10 befestigt. Sie kontaktieren Haftmagnete 39 und 38, die gerade auf die magnetische Oberfläche 30 aufgesetzt bzw. von ihr abgehoben werden.

Bei der folgenden Beschreibung der Funktion der Schleifkontakte 70a, 70b wird angenommen, daß sich das in Fig. 1e dargestellte Raupenfahrzeug nach links bewegt, so daß sich die Magnete 37, 39 am in Fahrtrichtung vorderen Ende befinden. Ferner werden polarisierbar ausgebildete Permanent-Elektromagnete zugrundegelegt. Diese Permanent-Elektromagnete lassen sich durch einen kurzzeitigen Erregerstrom sowohl magnetisieren als auch neutralisieren, wobei der jeweilige Zustand bis zum nächsten Erregerstrom aufrechterhalten bleibt. Dies kann zum einen dadurch erreicht werden, daß der Magnetkern aus einem geeigneten polarisierbaren Material besteht. Andererseits kann ein solcher Permanent-Elektromagnet auch zwei nebeneinanderliegende, gleichartige Permantentmagnete umfassen, von denen einer von einer Spule umgeben ist. Durch Bestromung der Spule läßt sich die Magnetisierungsrichtung dieses Magneten einstellen. Je nach dem ob dieser Permanentmagnet parallel oder antiparallel zu dem anderen magnetisiert ist, ist der gesamte Permanent-Elektromagnet entweder magnetisch oder neutral.

Der als Permanent-Elektromagnet ausgebildete Haftmagnet 37 befindet sich bei seinem Aufsetzen auf die magnetische Oberfläche 30 in einem neutralisierten Zustand. Dadurch wird sichergestellt, daß beim Aufsetzen des Haftmagneten 37 keine Stöße durch die magnetische Anziehungskraft auftreten. Zu diesem Zweck kann vorgesehen sein, daß der Haftmagnet 37 mit einem weiteren (nicht dargestellten) Schleifkontakt kurz vor seinem Aufsetzen auf die Oberfläche 30 neutralisiert wird. Ebenso ist es möglich, daß die Haftmagnete, die vor ihrem Abheben von der magnetischen Oberfläche 30 stets bei Position 70b neutralisiert werden, ununterbrochen in einem neutralisierten Zustand bleiben, bis sie am vorderen Ende der Raupe wieder auf die magnetische Oberfläche aufsetzen. In diesem Fall ist kein zusätzlicher Schleifkontakt zum kurzzeitigen Neutralisieren am vorderen Ende der Raupe 10 notwendig.

Sobald ein Haftmagnet 39 auf die Oberfläche 30 aufgesetzt ist, wird er durch Bestromung mittels des Schleifkontaktes 70a magnetisiert. Während des Kontaktes mit der magnetischen Oberfläche 30 bleiben die Haftmagnete 31 magnetisiert. Der hintere Haftmagnet 38 wird durch den Schleifkontakt 70b neutralisiert, bevor er von der magnetischen Oberfläche 30 abgehoben wird, so daß auch hierbei keine ruckartigen Bewegungen auftreten.

Aus Sicherheitsgründen kann es zweckmäßig sein, den Haftmagnet 38 nach seinem Abheben von der magnetischen Oberfläche 30 mit einem zusätzlichen (nicht dargestellten) Schleifkontakt wieder zu magnetisieren. Dadurch ist sichergestellt, daß stets fast alle Haftmagnete 31 magnetisiert sind, so daß ein Notfahrbetrieb bei Ausfall des Bestromungssystems der Haftmagnete 31 möglich ist. In diesem Fall muß - wie vorstehend bereits erläutert - auch am vorderen Ende der Raupe ein zusätzlicher (nicht dargestellter) Schleifkontakt vorgesehen sein, um die Haftmagnete 31 kurz vor ihrem Aufsetzen auf die Oberfläche 30 zu neutralisieren.

Die an der Raupe befestigten Haftmagnete 31 werden also stets im neutralisierten Zustand auf die Oberfläche 30 aufgesetzt, magnetisiert auf ihr geführt und vor ihrem Abheben wieder neutralisiert, wodurch eine ruhig laufende, stoßfreie Raupenbewegung auf der magnetischen Oberfläche 30 gewährleistet ist.

Bei umgekehrten Drehsinn der Raupen (d. h. das Raupenfahrzeug bewegt sich nach rechts) dient der Schleifkontakt 70b zum Magnetisieren und der Schleifkontakt 70a zum Neutralisieren der Haftmagnete.

Werden bei einem Ausführungsbeispiel gemäß Fig. 1e anstelle der Permanent-Elektromagnete mit polarisierbarem Kern solche mit einem permanentmagnetischen Kern verwendet, die sich jeweils nur während der Dauer des Erregerstroms in einem neutralisierten Zustand befinden, so sind die Schleifkontakte so anzuordnen, daß der Haftmagnet 37 während des gesamten Aufsetzvorgangs auf die Oberfläche 30 bestromt wird (also neutralisiert ist) und der Haftmagnet 38 während des gesamten Abhebevorgangs von der Oberfläche 30 bestromt wird.

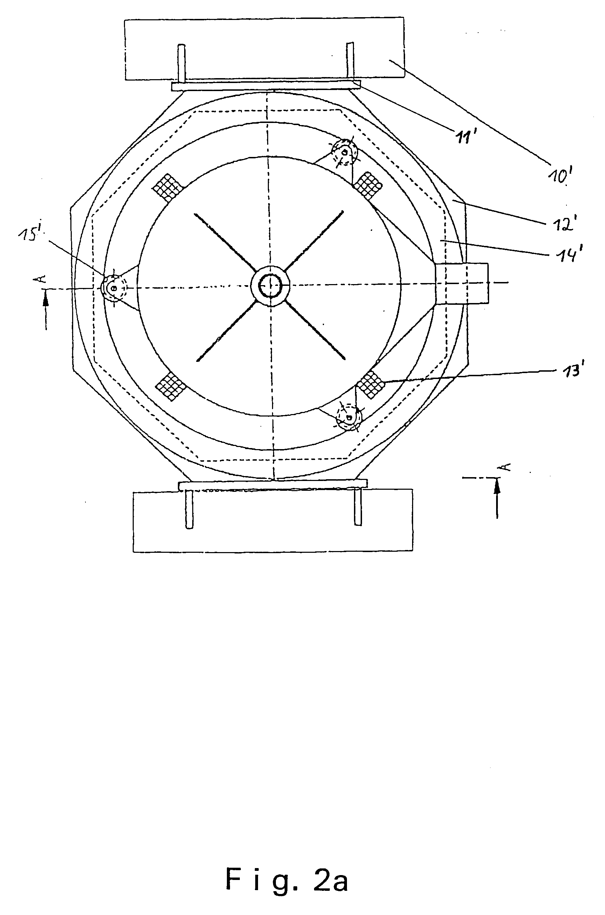

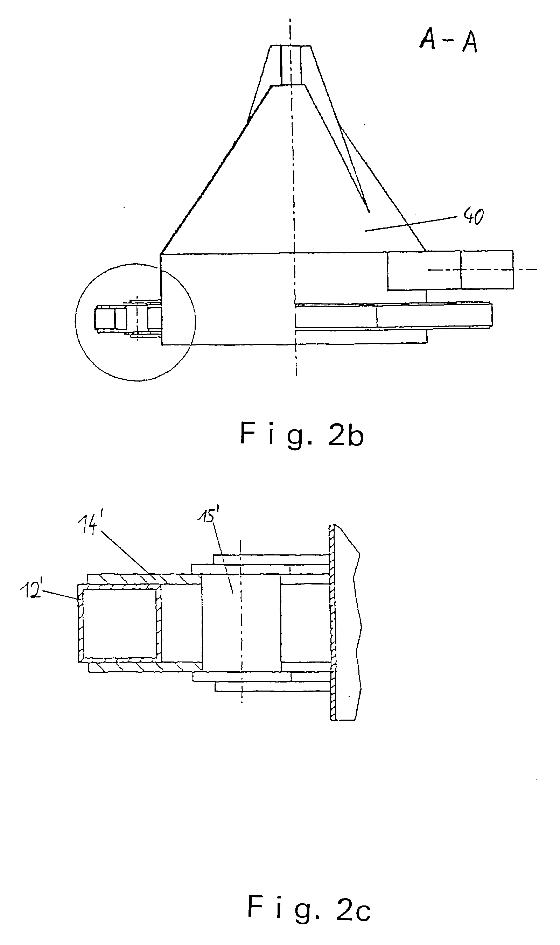

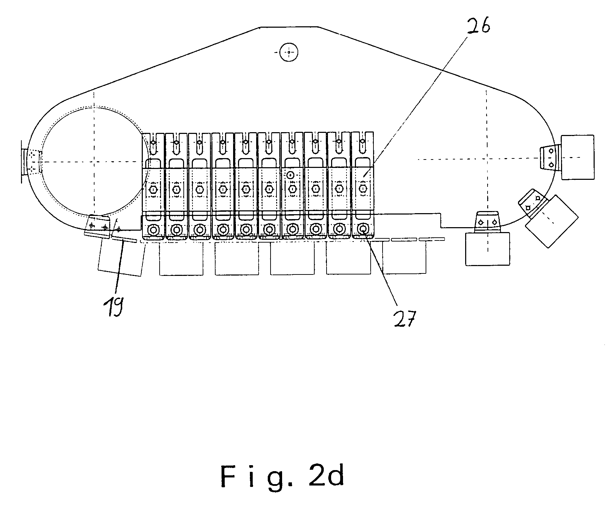

In den Figuren 2a, 2b, 2c und 2d ist eine weitere Ausführungsform des Raupenfahrzeuges dargestellt. Die Raupen 10' sind mittels Schnellverbindungen 11' am Lasttragerahmen 12' befestigt. An dem Lasttragerahmen 12' ist der Drehkranz 14' befestigt, in dem wie in der Figur 2c vergrößert dargestellt, die Führungsrollen 15' geführt werden. Die Fürungsrollen 15' sind auf angeflanschten Seitenstücken der Strahlglocke 40 gelagert. An der Strahlglocke sind die Hilfsmagnete 13' befestigt.

Die Permanent-Elektromagnete bei dieser Ausführungsform sind als polarisierbare Elektromagnete ausgeführt. Bei polarisierbaren Elektromagneten bleibt durch den Einsatz geeigneter Dauermagnetmaterialien der magnetische Fluß auch nach Abschalten des Erregerstroms erhalten, nachdem der Erregerstrom zuvor das Dauermagnetmaterial hinreichend polarisiert hat. Mit einem Erregerstrom kann sowohl das im neutralen Zustand befindliche Dauermagnetmaterial polarisiert werden, als auch (durch einen entgegengesetzten Erregerstrom) das polarisierte Dauermagnetmaterial wieder neutralisiert werden.

Im Fahrbetrieb wird der vordere Haftmagnet, nachdem er in Kontakt mit der Bearbeitungsfläche gekommen ist, mittels eines nicht dargestellten Schleifkontaktes magnetisiert. Der hintere Haftmagnet wird vor dem Abkippen von der magnetischen Oberfläche mittels eines weiteren Schleifkontaktes entmagnetisiert. Die Haftkraft, die durch die sich auf der magnetischen Oberfläche befindlichen Haftmagnete erzeugt wird, ist ausreichend, das Gewicht des Raupenfahrzeuges und des aufzunehmenden Werkzeuges zu tragen.

Beim Drehvorgang dieser Ausführungsform wird das Neutralisieren der Haftmagnete durch einen kurzzeitigen, über Schleifkontakte induzierten Erregerstrom erreicht. Der Drehvorgang läuft wie bei der ersten Ausführungsform beschrieben ab. Nach dem Drehvorgang werden die Haftmagnete durch einen weiteren Erregerstrom wieder magnetisiert. Zusätzlich sind bei dieser Ausführungsform die Raupenantriebe so steuerbar, daß sie Richtungsänderungen ausführen können.

Die Raupenkette ist, wie in Figur 2d dargestellt, flexibel gelagert. Diese Lagerung für Raupenketten ist allgemein für Raupenfahrzeuge mit einer Raupenkette 19 verwendbar. Dabei werden die Kettenglieder während des Kontaktes mit der Oberfläche über Führungsrollen 27 geführt. Die Führungsrollen 27 sind an Federelementen 26 angeordnet. Die Federelemente 26 können sich ausdehnen und stauchen, so daß sie sich Unebenheiten der Oberfläche anpassen können.

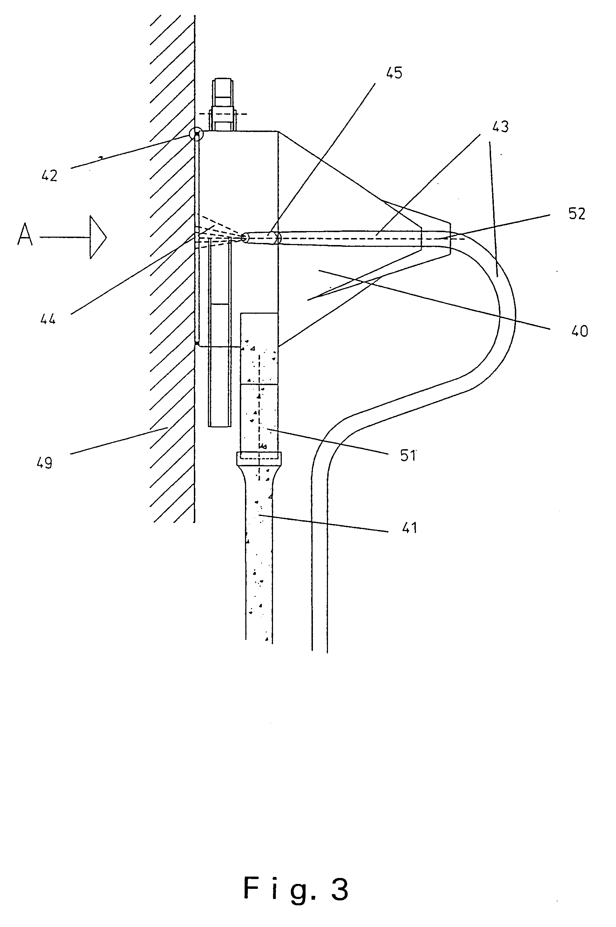

In der Figur 3 ist die Strahlvorrichtung, wie sie in Figur 2b teilweise gezeigt ist, genauer dargestellt. Die Strahlglocke 40 ist eine kegelförmige Konstruktion aus Leichtmetall oder Kunststoff. Die auf dem Lasttragerahmen angeordnete Strahlglocke 40 kommt lotrecht zur bearbeiteten Fläche zum Einsatz. Die Strahlglocke 40 ist zur bearbeiteten Fläche mit rundum verlaufenden Kunststoffborsten 42 abgedichtet. An der Spitze der Strahlglocke 40 ist die Durchführung 52 für den Strahlschlauch 43 vorgesehen. Der Strahlschlauch 43 wird ca. 500 mm bis 1.000 mm in die Strahlglocke 40 eingeführt. An der Spitze des Strahlschlauches 43 befindet sich eine Strahldüse 45, durch die das unter Druck zugeführte Strahlgut 44 auf die Bearbeitungsfläche 49 aufgebracht wird. Das Strahlgut 44 als auch die von der Oberfläche gelöste Beschichtung bzw. Verschmutzung werden über den seitlich an der Strahlglocke 40 angebrachten Absaugstutzen 51 und den daran angeschlossen Absaugschlauch 41 zu einer Entsorgungs- und Reinigungseinheit geleitet.

An einem nicht dargestellten Befestigungsträger werden die Versorgungsleitungen für das Raupenfahrzeug und die Strahlvorrichtung geführt. Dieser Befestigungsträger ist mit einem Meßsystem ausgerüstet, welches die Zugspannung der Versorgungsleitungen überwacht. Übersteigt die Zugspannung der Versorgungsleitungen einen festgelegten Toleranzbereich, wird der Raupenantrieb unmittelbar stillgesetzt und dem Bediener eine entsprechende Information gegeben.

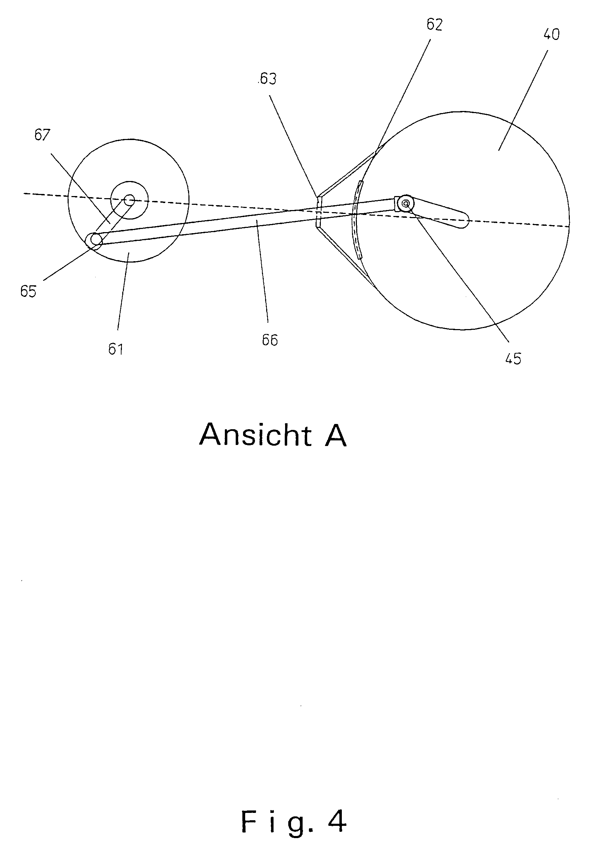

In Figur 4 wird der Exzenterantrieb der Strahlvorrichtung aus der Unteransicht gezeigt. An der Strahlglocke 40 befindet sich eine Durchführung 62, durch die die Stange 66 geführt wird. Die Durchführung 62 ist mit Bast oder Kunststoffborsten abgedichtet, um ein Austreten des Strahlgutes zu vermeiden. Die Stange 66 ist an einer Lagerung 63, welche an der Strahlglocke 40 befestigt ist, gelagert. Am einen Ende der Stange 66 ist die Strahldüse 45 befestigt. Das andere Ende der Stange 66 ist durch ein Befestigungselement 65 mit einer Exzenterscheibe 61 verbunden. Über das Langloch 67 in der Exzenterscheibe 61 wird die Größe der Bearbeitungsfläche, über die die Strahldüse rotiert, eingestellt. Die Exzenterscheibe 61 wird über einen nicht dargestellten Elektromotor angetrieben.

## Patentansprüche

1. Verfahren zum Befahren magnetischer Oberflächen mit einem Raupenfahrzeug, das mit magnetischen Kräften an der Oberfläche gehalten wird,
**dadurch gekennzeichnet,**
daß die Haltekraft mittels Haftmagneten (31) erzeugt wird, die als Permanent-Elektromagnete ausgebildet sind.

2. Verfahren nach Anspruch 1, **dadurch gekennzeichnet**, daß die Haftmagnete (31) zum Abnehmen des Raupenfahrzeuges von der magnetischen Oberfläche (30) neutralisiert werden.

3. Verfahren nach Anspruch 1 oder 2, **dadurch gekennzeichnet**, daß sich das Raupenfahrzeug auf zwei Raupen (10) mit je einer Raupenkette (19) bewegt, an oder in denen die Haftmagnete (31, 37, 38) angeordnet sind, wobei sich im Fahrbetrieb die Haftmagnete (37) am vorderen Ende des Raupenfahrzeugs beim Aufsetzen auf die Oberfläche in einem neutralisierten Zustand befinden und nach dem Aufsetzen auf die Oberfläche magnetisiert werden und die Haftmagnete (38) am hinteren Ende des Raupenfahrzeuges vor dem Abnehmen von der Oberfläche neutralisiert werden.

4. Verfahren nach mindestens einem der vorhergehenden Ansprüche, **dadurch gekennzeichnet**, daß die Raupen (10) an einem um Hilfsmagnete (13) drehbar gelagerten Lasttragerahmen (12) befestigt sind, wobei zur Änderung der Fahrtrichtung ein oder mehrere Hilfsmagnete (13) aktiviert werden, die Haftmagnete (31) neutralisiert werden und der Lasttragerahmen (12) mittels eines Hilfsantriebes (17) gedreht wird.

5. Raupenfahrzeug zum Befahren magnetischer Oberflächen mit einem Lasttragerahmen, einem Raupenantrieb und Haftmagneten zum Halten des Fahrzeuges an einer magnetischen Oberfläche, insbesondere zur Durchführung des Verfahrens nach mindestens einem der Ansprüche 1 bis 4,
**dadurch gekennzeichnet,**
daß die Haftmagnete (31) als Permanent-Elektromagnete ausgebildet sind.

6. Raupenfahrzeug nach Anspruch 5, **dadurch gekennzeichnet**, daß das Raupenfahrzeug zwei Raupen (10) mit je einer Raupenkette (19) aufweist und die Haftmagnete (31) an oder in den Kettengliedern der Raupenketten (19) angeordnet sind.

7. Raupenfahrzeug nach Anspruch 5 oder 6, **dadurch gekennzeichnet**, daß am vorderen und hinteren Ende einer Raupe jeweils Mittel (70a, 70b) zum Neutralisieren der Haftmagnete (31) vorgesehen sind.

8. Raupenfahrzeug nach Anspruch 7, **dadurch gekennzeichnet**, daß die Mittel zum Neutralisieren der Haftmagnete (31) Schleifkontakte (70a, 70b) sind.

9. Raupenfahrzeug nach mindestens einem der Ansprüche 5 bis 8, **dadurch gekennzeichnet**, daß der Lasttragerahmen (12) drehbar um Hilfsmagnete (13) gelagert ist, welche das Gewicht des Raupenfahrzeuges tragen können, und ein Hilfsantrieb (17) zum Drehen des Lasttragerahmens vorgesehen ist.

10. Raupenfahrzeug nach mindestens einem der Ansprüche 5 bis 9, **dadurch gekennzeichnet**, daß die Raupenketten (19) von je einem Motor angetrieben werden, wobei die Motoren unabhängig voneinander oder gleichsinnig steuerbar sind.

11. Raupenfahrzeug nach mindestens einem der Ansprüche 5 bis 10, **dadurch gekennzeichnet**, daß die Antriebseinheit fernsteuerbar und/oder programmierbar ist.

12. Raupenfahrzeug nach mindestens einem der Ansprüche 5 bis 11, **dadurch gekennzeichnet**, daß das Raupenfahrzeug durch Selbsthemmung des Antriebes rücklaufsicher ist.

13. Raupenfahrzeug nach mindestens einem der Ansprüche 5 bis 12, **dadurch gekennzeichnet**, daß die mit Haftmagneten (31) versehenen Kettenglieder mit einer Pendelaufhängung (21, 22, 24) verbunden sind, deren Pendelstäbe (21) durch Federn (23) mit einer Federkraft beaufschagt werden.

14. Raupenfahrzeug nach mindestens einem der Ansprüche 5 bis 13, **dadurch gekennzeichnet**, daß an beiden Enden des Raupenfahrzeugs Mittel zur Überwachung der Oberflächenbeschaffenheit vorgesehen sind.

15. Raupenfahrzeug nach mindestens einem der Ansprüche 5 bis 14, **dadurch gekennzeichnet**, daß an dem Raupenfahrzeug ein Träger befestigt ist, auf dem Versorgungsleitungen geführt werden, und daß eine Meßapparatur zur Messung der Zugspannung an den Versorgungsleitungen vorgesehen ist.

16. Raupenfahrzeug nach mindestens einem der Ansprüche 5 bis 15, **dadurch gekennzeichnet**, daß an dem Raupenfahrzeug eine Strahlvorrichtung (40, 45) befestigt ist.

17. Raupenfahrzeug nach Anspruch 16, **dadurch gekennzeichnet**, daß die Strahlvorrichtung eine Strahlglocke (40) umfaßt, in die durch eine Strahlschlauchdurchführung (52) der Strahlschlauch (43) mit der Strahldüse (45) geführt sind, und daß die Strahlgocke (40) einen Absaugstutzen (51) und Kunststoffborsten (42) zum Abdichten der Strahlglocke (40) aufweist.

18. Raupenfahrzeug nach Anspruch 16 oder 17, **dadurch gekennzeichnet**, daß ein Exzenterantrieb zum Führen der Strahldüse (45) über die Bearbeitungsfläche vorgesehen ist, wobei der Exzenterantrieb aus einem Antriebsmotor, einer Exzenterscheibe (61) mit einem Langloch (67) und einer Stange (66) besteht, wobei die Stange an einem Ende mit einer verstellbaren Befestigungvorrichtung (65) an der Exzenterscheibe (61) und an dem anderen Ende an der Strahldüse befestigt ist.
